# EUROPEAN PATENT APPLICATION

(11) **EP 1 313 079 A2**
(43) Date of publication of application: **21.05.2003**
(21) Application number: 02078959.0
(22) Date of filing: 24.09.2002
(51) Int. Cl.: G08G 1/0968, G08G 1/005, G01C 21/20, G01S 5/14

(54) **RFID navigation system**

(30) Priority: 25.10.2001 US 144830
(71) Applicant: Koninklijke Philips Electronics N.V., 5621 BA Eindhoven (NL)
(72) Inventor: Piotrowski, Tony E., 5656 AA Eindhoven (NL)
(74) Representative: Groenendaal, Antonius Wilhelmus Maria

(57) **Abstract**

A navigation system is disclosed including at least one RF tag having a predetermined signature. The system also includes a receiver having an RF tag reader capable of reading the predetermined signature. A controller is communicatively coupled to the receiver, a memory and output device. The controller is arranged to receive the predetermined signature, based upon the predetermined signature, obtain at least one navigation instruction stored in the memory, and output the navigation instruction using the output device. Additional non-navigational information may also be provided using the output device. The receiver may also include an input device for inputting information into the navigation system.

## Description

The present invention pertains generally to the field of navigation systems, and in particular, the invention relates to a position system used for navigation around a geographic region such as a large building complex using, in part, an RFID system.

Conventional navigation systems are known that can assist/guide a user to a location. For example, GPS (global positioning system) is widely used in positioning and navigation applications. GPS is a radio navigational aid using multiple satellites in high orbit around the earth with position fixes determined by range and range-rate measurements. GPS provides extremely accurate position and velocity information to users around the world. Satellites, maintained by the U.S. government, transmit coded radio frequency (RF) signals to earth-based GPS receivers. Highly accurate (within several meters) position determinations (*i.e*., longitude and latitude coordinates) are based on measurements of propagation times of the RF signals from the satellites.

A GPS receiver unit maybe incorporated in a mobile handset to receive signals from the GPS satellites. These signals are used to identify the position of the handset. The GPS receiver may also include or be linked to a digitally stored map to provide navigation instructions to the user. However GPS receivers need line of sight to satellites so they are potentially unreliable inside cars, buildings, and under foliage. Also GPS receivers themselves may be expensive.

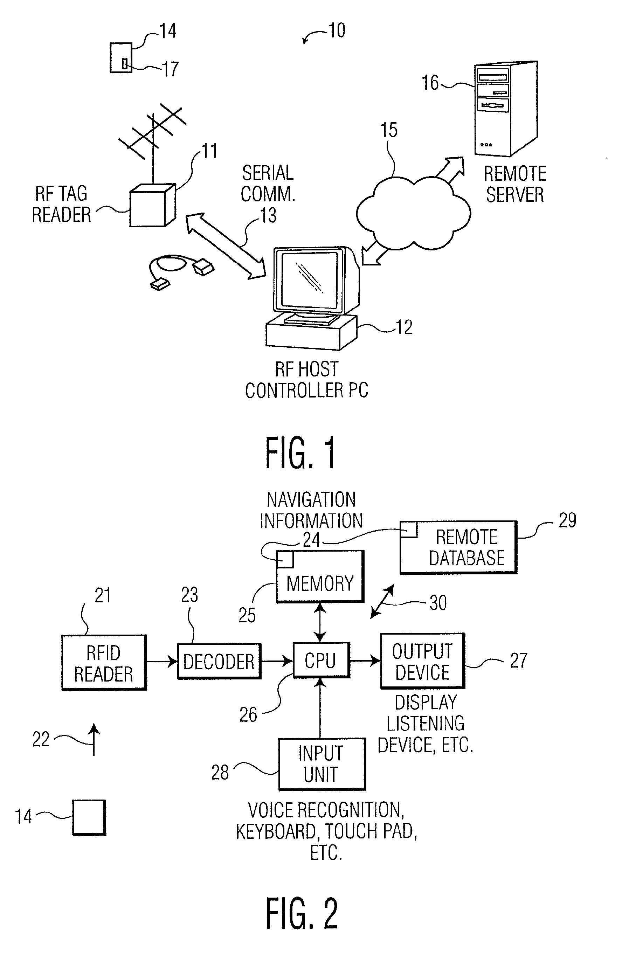

It has been proposed in the past to use existing lighting infrastructure in buildings to transmit signals by modulating the light output of light sources (see, e.g., U.S. Patents 3,900,404 and 6,198,230). In such systems, a photosensitive detector is used to receive the transmitted information. Input data (audio, analog data, or digital data) is fed to a modulation circuit with modulates the light output (see Fig. 1). The transmission bit-rate is limited by the maximum modulation frequency of the output of the light source. Furthermore the light sources must be tied into a network to receive the data input.

As discussed above, for in-building positioning and navigation applications, GPS is not reliable and the GPS receivers are expensive. Also conventional methods for transmitting data by modulating the light output require a network to send the data to the light source driver. In these systems, the transmission data-rate is limited by the maximum modulation frequency of the light output.

Accordingly, there is a need for a in-building navigation system that solves the shortcomings of the above described systems

Radio frequency identification (RFID) technology is also known that combine the advantages of barcode, Electronic Article Surveillance (EAS) and traditional RFID solutions. RFID systems allow for non-contact reading in manufacturing and other types of environments where barcode labels may not perform properly or be practical. RFID has applications in a wide range of markets including automated vehicle identification (AVI) systems and livestock identification because of its capability to track moving objects. The technology has become a primary player in identification, automated data collection, and analysis systems worldwide.

Such systems are designed to serve mass markets with many millions of labels needed per year. For example, Philips Semiconductors' ICODE ICs represent the state-of-the-art in smart label technology, offering a low-cost, re-programmable and disposable solution for source tagging, automatic data capture, theft protection and data storage on a product or its packaging. ICODE smart labels allow almost any item to be tagged for efficient handling. ICODE's highly automated item scanning process does not require line-of-sight and can scan multiple labels at the same time.

While, as discussed above, these conventional RFID systems have many applications, they have typically been used for larger scale applications such as airline baggage reconciliation, postal tracking, road toll management and electronic article surveillance. The inventor has found, however, that RFID systems may be used in a novel manner to address the shortcomings of the navigation systems discussed above.

One aspect of the present invention uses an RFID network within a geographic location or region such as within a building complex (e.g., a mall) to form an positioning and navigational system. The building complex may be any type of house, office, arena, complex or location.

Various embodiments of the invention can be used to add in navigating a user as desired. Application examples of this invention include:
- finding a particular store in a mall;
- finding a room or a specific facility in a hotel;
- locating an item in a supermarket or a warehouse;
- finding a gate of a specific facility in an airport;
- locating a seat in sports arena;
- obtaining information about a store, location or item; and
- finding your car in a mall parking lot.

One embodiment of the present invention is directed to a positioning system used for navigation inside a building, structure, arena or location. RFIDs are used as beacons to transmit unique codes. The transmitted codes are decoded by a receiver and are used in combination with a digital building map stored in the receiver to provide navigation instructions to the user within a building (e.g., mall, hotel or airport).

In one embodiment, a navigation system includes at least one RF tag having a predetermined signature. A receiver including an RF tag reader is used to read the predetermined signature. A controller is communicatively coupled to the receiver, a memory and an output device. The controller is arranged to receive the predetermined signature, based upon the predetermined signature, obtain at least one navigation instruction stored in the memory, and output the navigation instruction using the output device.

In another embodiment, an receiver is provided for operation with the navigation system.

Yet another embodiment is directed to a navigation system including means for producing an RF signal having a signature, means for reading the signature from at least one RF tag and means for providing a navigation instruction in accordance with the signature.

These and other embodiments and aspects of the present invention are exemplified in the following detailed disclosure.

The features and advantages of the present invention can be understood by reference to the detailed description of the preferred embodiments set forth below taken with the drawings, in which:
Fig. 1 is an RFID system.
Fig. 2 is a block diagram of a receiver in accordance with one embodiment of the invention.
Fig. 3. is a block diagram illustrating an exemplary application of an in-building navigation system in accordance with another embodiment of the invention.

Referring now to Fig. 1, an RFID system 10 consists of a tag reader 11 which is connected to a personal computer 12 (PC) through a serial port 13. The PC 12 takes action as it reads the trigger of an RF tag 14. Information can be exchanged via a communication medium 15 (e.g., Internet or Intranet) with a remote server 16.

The tag reader 11 typically consists of three components: an antenna or coil; a transceiver (with decoder); and a transponder (commonly called an RF tag) that is electronically programmed with information.

The antenna emits radio signals to activate the tag and read and write data to it. The Antenna is the conduit between the RF tag 14 and the transceiver. It helps control the system's data acquisition and communication. The electromagnetic fields produced by the antenna can be constantly present or activated as needed when RF tags 14 are detected by a sensor.

In the present invention, a plurality of RF tags 14 may be used within a location, structure or region. Each RF tag 14 is programmed or encoded with a unique code 17. In this way, each RF tag 14 has a signature in accordance with the unique code 17. The RF tag 14 may be supplied from a manufacturer with the unique code 17. The unique code 15 may also be programmable using the PC 12.

Thus, a plurality of the RF tags each would have a different unique code 17 associated therewith. The unique code 17 may be as simile as a plurality of bits. The number of bits is chosen to be high enough to ensure at least that in practice no two RF tags 14 installed a building or location would share the same unique code 17. One skilled in the art will appreciate that various alternative formats may be used the unique code 17.

A block diagram of a preferred receiver 20 in accordance with one embodiment is shown in Fig. 2. The receiver 20 includes an RFID reader 21 to detect information signals 22 from the RF tags 14 and a decoder 23 to extract the unique code 17 from the information signal 22. The unique code 17 is associated with a location of the RF tag 14. Navigation information 24 related to all RF tag 14 locations is stored a memory 25. For example, the navigation information 24 may include a digital map of the building complex or region. The locations of the RF tags 14 would be identified in the digital map. Using the unique code 17 from one or more RF tags 14 and the navigation information 24, the current position of a user can be determined. Based upon the current position, instructions can be provided to the user to reach a specific location.

The unique code 17 is used to retrieve the relevant information from the memory 25. The overall processing of unique codes 17 and the navigation instructions 24 is performed by a CPU 26 or controller.

The CPU 26 may also include a communication interface, a memory interface, a CD-ROM drive interface and a video interface (not shown). The CPU 26 comprises a microprocessor or the like for executing computer readable code, i.e., applications, such those noted above, out of the memory 25. Such applications may be stored in memory 25 or, alternatively, on a floppy disk in disk drive 36 or a CD-ROM in a CD-ROM drive. The CPU 26 accesses the applications (or other data) stored on a floppy disk via the memory interface and accesses the applications (or other data) stored on a CD-ROM via CD-ROM drive interface. In this regard, the navigation information 24 may be quickly loaded into the memory 25 of the receiver 20 when and as needed, e.g., when entering a mall.

As noted above, the functions of the system 10 and the receiver 20 may be implemented by computer readable code executed by a data processing apparatus. The code may be stored in a memory within the data processing apparatus or read/downloaded from a memory medium such as a CD-ROM or floppy disk. In other embodiments, however, hardware circuitry may be used in place of, or in combination with, software instructions to implement the invention. These functions/software/hardware may be formed as part of the receiver 20 or be an adjunct unit. The invention, for example, can also be implemented on a Personal Digital Assistant, laptop computer or a cellular telephone.

The receiver 20 also includes an output device 27. The output device 27 may include a variety of audio and visual units. The output device may also be a separate unit coupled to the CPU 26. For example, the output device 27 may be a personal computer or a cellular phone.

The receiver 20 may also include an input unit 28. The input unit 28 may comprise a variety of conventional data input devises. For example, the input unit 28 may be a keyboard, push buttons, a touch pad, a mouse, a voice recognition unit or the like. Using the input unit 28, a user of the present invention can enter information such as a desired destination. Using the input information, the CPU 26 will use the output device 27 to communicate to the user the directions to his destination.

The receiver 20 may also be able to communicate to one or more of remote devices 29 over a network 30. The network 30 may be a global computer communications network such as the Internet, a wide area network, a metropolitan area network, a local area network, a cable network, a satellite network or a telephone network, as well as portions or combinations of these and other types of networks. The network 30 may be accessed by the receiver 20 through wired connections, wireless connections or combinations thereof, using well-known conventional communication protocols such as the Internet Protocol (IP).

As shown in Fig. 2, the navigation information 24 may be located the remote site 29, e.g., a web server. The remote site 29 may include a data storage device that stores the multimedia and audio information related to the digital map 24. The data storage may be any suitable storage medium such as audio/video cassettes, digital audio tapes (DAT), laser discs, DVDs, and the like.

Extensible mark-up language (XML) is fast becoming the dominant language for describing content delivered over the Internet. The XML standard describes a class of data objects called XML documents and the behavior of computer programs which process such documents. XML documents are made up of storage units called entities, which contain either parsed or unparsed data. Parsed data is made up of characters, some of which form character data, and some of which form markup. Markup for a given XML document encodes a description of the storage layout and logical structure of that document. XML provides a mechanism to impose constraints on the storage layout and logical structure. Additional details regarding conventional XML may be found in XML 1.0 (Second Edition), World Wide Web Consortium (W3C) Recommendation, October 2000, www. w3.org/TR/REC-xml, which is incorporated by reference herein.

Also SOAP is a protocol for exchanging information in a distributed, decentralized environment. SOAP is an XML based protocol consisting of: an envelope which defines a means for describing what a message contains and how it is to be processed, encoding rules for expressing application-defined datatypes, and a convention for representing remote procedure calls and responses. SOAP messages are typically one-way transmissions from a sender to a receiver, but they can be combined to implement patterns such as request/response.

Preferably an XML/SOAP message is sent and received by the receiver 20 and the remote site 29. This is advantageous because messages can be exchanged efficiently in a distributed, decentralized environment. The XML/SOAP message can be adapted to many different applications. SOAP Modules may be created using WriteSOAP. WriteSOAP is a module for creating SOAP messages compliant with the SOAP specifications. See SOAP: Simple Object Access Protocol Version 1.1 (www.w3.org/TR/SOAP/), which is incorporated by reference herein. Another requirement for module is to create SOAP messages that can be understood by the APACHE-SOAP implementation. This is a very versatile tool for writing XML documents. It is able to make a direct mapping between various data-types and their equivalent representation in SOAP.

In addition to navigational information, customized information about a location, store or item near the RF tag 14 may also be accessed via the receiver 20. For example, when a user passes by a particular store, location or item, the receiver 20 may read the RF tag 14 and then obtain promotional, sales or general information about that store, location or item that is stored in the memory 25 or accessible at the remote site 29.

In another embodiment, a location marker may also be inserted or created in the receiver 20 to mark a spot to return to in the future. The marker is based readings from surrounding RF tags 14. This embodiment may be used, for example, to return to a car parked in a mall parking lot.

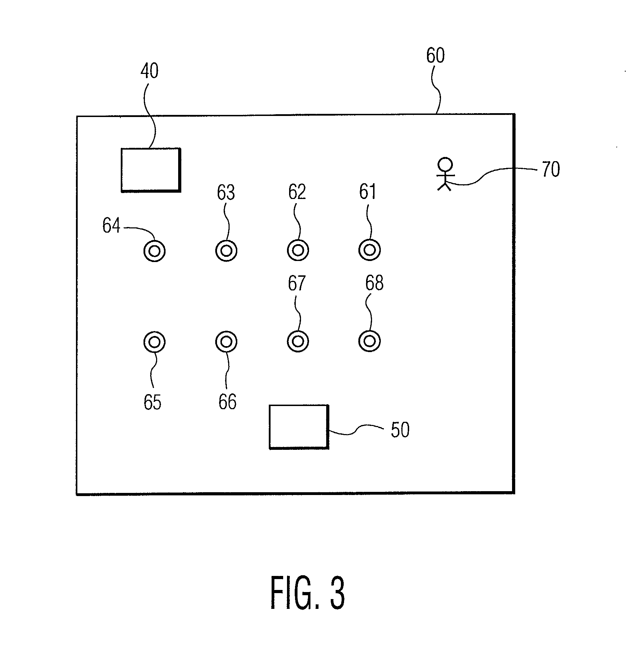

Fig. 3 a block diagram illustrating an exemplary application of the system 10. In this example, a store 40 and a store 50 are located in a mall 60. A plurality of light sources 61-68 are located throughout the mall 60. A person 70 using the receiver 20 can receive navigation instructions to direct the person 70 to the store 50. As the person 70 passed by the light source 61, the person 70 would receive navigation instructions, e.g., proceed south or continue straight. The navigation instructions may also be in the form of a map of the mall 60 with the person 70 current and desired location highlighted. As the person 70 passes by the light source 68, the person 70 may receive additional navigation instructions, e.g., proceed west or turn right. When the person 70 was near the light source 67, the person 70 may receive a final navigation instruction, e.g., stop or at desired destination.

While the present invention has been described above in terms of specific embodiments, it is to be understood that the invention is not intended to be confined or limited to the embodiments disclosed herein. On the contrary, the present invention is intended to cover various structures and modifications thereof included within the spirit and scope of the appended claims.

## Claims

1. A navigation system (10) comprising:
means for producing an RF signal having a signature (14, 17);
means for decoding the signature (20, 21, 23);
means for providing a navigation instruction in accordance with the signature (24, 25, 26, 27).

2. A navigation system (10) as claimed in claim 1, the system comprising:
at least one RF tag (14) having a predetermined signature (17);
a receiver (20) including an RF tag reader (21) capable of reading the predetermined signature (17);
a memory (25);
a controller (26) communicatively coupled to the receiver (20) and the memory (25); and
an output device (27) coupled to the controller (26),
wherein the controller (26) is arranged to receive the predetermined signature (17), based upon the predetermined signature (17), obtain at least one navigation instruction (24) stored in the memory (25), and output the navigation instruction (24) using the output device (27).

3. The navigation system (10) according to claim 2, wherein the predetermined signature comprises a unique binary code (17).

4. The navigation system according to claim 2, wherein the navigation system (10) is located within a building complex (60).

5. The navigation system (10) according to claim 2, wherein the output device (27) comprises an audio device or an image device.

6. The navigation system (10) according to claim 2, wherein the memory (25) also includes a digital map (24) used to provide the navigation instruction.

7. The navigation system (10) according to claim 6, wherein the memory (26) is integrated with the receiver (20), the controller (26) and the output device (27).

8. The navigation system (10) according to claim 2, wherein the memory (25) is accessed by the controller via a communication network (30).

9. The navigation system (10) according to claim 1 or 2, further comprising an input device (28).

10. The navigation system (10) according to claim 9, wherein the memory (25) also includes non-navigation information that may be provided using the output device (27) as needed.

11. The navigation system (10) according to claim 9, wherein the a location marker may be input using the input device (28).

12. The navigation system (10) according to claim 9, wherein the input device (28) comprises a keyboard, push buttons, a touch pad, a mouse or a voice recognition unit.

13. A receiver (20) comprising:
an RF tag reader (21) capable of reading a predetermined code (17) from at least one RF tag (14);
a memory (25);
a controller (26) communicatively coupled to the receiver (20) and the memory (25); and
an output device (27) coupled to the controller (26),
wherein the controller (26) is arranged to receive the predetermined code (17), based upon the predetermined code (17), obtain at least one navigation instruction (24) stored in the memory (25), and output the navigation instruction using the output device (27).

14. The receiver (20) according to claim 13, wherein the memory (25) is integrated with the controller (26) and the output device (27).

15. The receiver (20) according to claim 13, wherein the memory (25) is accessed by the controller (26) via a communication network (30).

16. The receiver (20) according to claim 13, further comprising an input device (28).

17. The receiver (20) according to claim 13, wherein the memory (25) includes a digital map (24) used to provide the navigation instruction.
